# EUROPÄISCHE PATENTSCHRIFT

(11) **EP 3 083 312 B1**
(45) Veröffentlichungstag und Bekanntmachung des Hinweises auf die Patenterteilung: **07.07.2021**
(21) Anmeldenummer: 14811889.6
(22) Anmeldetag: 12.12.2014
(51) Int. Cl.: B60K 15/077, B60K 15/03

(54) **KRAFTSTOFF-SAMMELEINRICHTUNG FÜR EINEN KRAFTSTOFFBEHÄLTER EINES KRAFTFAHRZEUGES**
FUEL COLLECTING DEVICE FOR A FUEL TANK OF A MOTOR VEHICLE
COLLECTEUR DE CARBURANT POUR UN RÉSERVOIR DE CARBURANT D'UN VÉHICULE AUTOMOBILE

(30) Priorität: 17.12.2013 DE 102013226295
(43) Veröffentlichungstag der Anmeldung: 26.10.2016
(73) Patentinhaber: Vitesco Technologies GmbH, 30165 Hannover (DE); Bayerische Motoren Werke Aktiengesellschaft, 80809 München (DE)
(72) Erfinder: GERHARDT, Marc, 44287 Dortmund (DE); WELLHÄUSER, Markus, 85232 Unterbachern (DE); SCHNEIDER, Tobias, 80804 München (DE); HEIMER, Toni, 85716 Unterschleissheim (DE); MENZL, Peter, 85521 Ottobrunn (DE)
(86) Internationale Anmeldenummer: PCT/EP2014/077495
(87) Internationale Veröffentlichungsnummer: WO 2015/091238

(56) Entgegenhaltungen:
- EP-A1- 0 712 752
- EP-A2- 0 875 411
- DE-A1-102006 003 420
- FR-A1- 2 774 948

## Beschreibung

Die Erfindung betrifft eine Kraftstoff-Sammeleinrichtung für einen Kraftstoffbehälter eines Kraftfahrzeuges mit einem Schwalltopf zum Sammeln von Kraftstoff, mit einem am Boden des Kraftstoffbehälters zu befestigenden Halteelement und mit Befestigungsmitteln zur Befestigung des Schwalltopfes an dem Halteelement.

Solche Kraftstoff-Sammeleinrichtungen werden in heutigen Kraftfahrzeugen häufig eingesetzt und sind aus der Praxis bekannt. In dem Schwalltopf wird der Kraftstoff gesammelt und wird von einer Kraftstoff-Fördereinrichtung zu einer Brennkraftmaschine des Kraftfahrzeuges gefördert. Im montierten Zustand ist der Schwalltopf der bekannten Kraftstoff-Sammeleinrichtung mittels des Halteelementes an dem Boden des Kraftstoffbehälters des Kraftfahrzeuges gehalten. Das Halteelement wird mit dem Boden des Kraftstoffbehälters verschweißt. Die Montage des Schwalltopfes an dem Halteelement erfolgt durch eine Montageöffnung im Kraftstoffbehälter. Da die Montageöffnung meist nur sehr kleine Abmessungen aufweist, sind die Befestigungsmittel bei der Montage des Schwalltopfes an dem Halteelement nicht sichtbar.

Die FR 2 774 948 A1 beschreibt eine Haltevorrichtung für einen Schwalltopf. Die Haltevorrichtung ist integraler Bestandteil des Kraftstoffbehälters und einstückig mit diesem ausgebildet.

Der Erfindung liegt das Problem zugrunde, eine Kraftstoff-Sammeleinrichtung der eingangs genannten Art so weiter zu bilden, dass der Schwalltopf einfach montiert werden kann und dass die Befestigung des Schwalltopfes an dem Halteelement nach der Montage zuverlässig gewährleistet ist.

Dieses Problem wird erfindungsgemäß dadurch gelöst, dass die Befestigungsmittel eine Einhakverbindung mit zumindest einem an dem Schwalltopf oder dem Halteelement angeordneten Haken und mit einer am jeweils gegenüberliegenden Bauteil des Halteelementes oder des Schwalltopfes angeordneten Ausnehmung zum Einschwenken des Hakens und eine der Einhakverbindung gegenüberliegend angeordnete, den Schwalltopf quer zu der Montagerichtung der Einhakverbindung fixierende Rastverbindung haben.

Durch diese Gestaltung lässt sich der Schwalltopf zunächst über die Einhakverbindung einfach an dem Halteelement montieren, indem der Haken in die Ausnehmung eingesteckt und eingeschwenkt wird. Anschließend wird die Rastverbindung zwischen dem Schwalltopf und dem Halteelement erzeugt. Hierdurch gestaltet sich die Montage besonders einfach. Die Rastverbindung lässt sich nur dann fehlerfrei einrasten, wenn die Einhakverbindung wie vorgesehen erzeugt ist. Solches Einrasten der Rastverbindung lässt sich haptisch erfassen. Damit wird eine fehlerhafte Montage des Schwalltopfes vermieden.

Die vorgesehene Positionierung des Schwalltopfes gegenüber dem Halteelement gestaltet sich gemäß einer anderen vorteilhaften Weiterbildung der Erfindung besonders einfach, wenn die Einhakverbindung zwei an dem Schwalltopf oder dem Halteelement angeordnete und voneinander beabstandete Ausnehmungen und dass das den Ausnehmungen gegenüberliegende Bauteil des Halteelements oder des Schwalltopfes zwei in die Ausnehmungen eindringende Vorsprünge hat. Weiterhin wird der Schwalltopf an mehreren Stellen verteilt abgestützt, so dass die Verbindung des Schwalltopfes mit dem Halteelement eine hohe Stabilität hat.

Zur weiteren Sicherung des Schwalltopfes in der Ebene der Einhakverbindung und der Rastverbindung trägt es gemäß einer anderen vorteilhaften Weiterbildung der Erfindung bei, wenn eine Stütze zwischen den Ausnehmungen eine dem lichten Abstand der Vorsprünge entsprechende Breite hat. Weiterhin führt diese Gestaltung zu einer Vereinfachung der Montage, da der Schwalltopf zwangsläufig wie vorgesehen gegenüber dem Halteelement ausgerichtet ist, wenn sich die Einhakverbindung einschwenken lässt.

Zur Sicherung des Schwalltopfes gegen ein unbeabsichtigtes Lösen trägt es gemäß einer anderen vorteilhaften Weiterbildung der Erfindung bei, wenn der Schwalltopf quer zur Montagerichtung der Einhakverbindung von einem Stützelement abgestützt ist.

Die Kraftstoff-Sammeleinrichtung gestaltet sich gemäß einer anderen vorteilhaften Weiterbildung der Erfindung konstruktiv besonders einfach, wenn das Stützelement näher an der Rastverbindung angeordnet ist als an der Einhakverbindung. Diese Gestaltung führt zudem zu einer Entlastung der Rastverbindung von auf den Schwalltopf einwirkenden Betriebskräften.

Die Kraftstoff-Sammeleinrichtung lässt sich gemäß einer anderen vorteilhaften Weiterbildung der Erfindung besonders einfach fertigen, wenn das Stützelement einen von dem Halteelement oder dem Schwalltopf hervorstehenden Zentrierzapfen hat und das jeweils gegenüberliegende Bauteil des Schwalltopfes oder des Halteelementes eine Vertiefung zur passgenauen Aufnahme des Zentrierzapfens hat. Durch diese Gestaltung ist der Schwalltopf im montierten Zustand gegen Verdrehen gesichert.

Zur weiteren Vereinfachung der Montage der Kraftstoff-Sammeleinrichtung trägt es gemäß einer anderen vorteilhaften Weiterbildung der Erfindung bei, wenn der Zentrierzapfen senkrecht von dem Halteelement absteht und nahe an der Rastverbindung angeordnet ist. Die Anordnung des Zentrierzapfens nahe der Rastverbindung führt zudem zu einer mechanischen Entlastung der Rastverbindung. Bei der Montage lässt sich der Schwalltopf einfach in die Einhakverbindung einstecken und auf das Halteelement zuschwenken, so dass der Zentrierzapfen in die Vertiefung gelangt und die Rastverbindung einrasten kann. Bei einer fehlerhaften Montage des Schwalltopfs würde der Zentrierzapfen neben die Vertiefung gelangen und damit ein Einrasten der Rastverbindung verhindern. Hierdurch wird bei einem fühlbaren Einrasten der Rastverbindung gewährleistet, dass der Schwalltopf wie vorgesehen montiert ist.

Im Kraftstoffbehälter fest angeordnete Bauteile lassen sich bei einer Beschädigung nicht auswechseln. Eine Anordnung beweglicher Bauteile der Rastverbindung an dem Halteelement könnte dazu führen, dass bei einer fehlerhaften Montage des Schwalltopfes die Rastverbindung beschädigt und damit das Halteelement zusammen mit dem Kraftstoffbehälter entsorgt werden müsste. Eine Beschädigung beweglicher Bauteile der Rastverbindung lässt sich gemäß einer anderen vorteilhaften Weiterbildung der Erfindung auf den Schwalltopf beschränken, wenn ein Federelement der Rastverbindung an dem Schwalltopf angeordnet ist und wenn das Halteelement ausschließlich feststehende Bauteile der Rastverbindung aufweist. Durch diese Gestaltung haben die im Kraftstoffbehälter zu befestigenden Bauteile der Kraftstoff-Sammeleinrichtung eine besonders hohe Stabilität. Eine mögliche Beschädigung der beweglichen Bauteile der Rastverbindung ist auf den leicht auszuwechselnden Schwalltopf beschränkt.

Die Rastverbindung gestaltet sich gemäß einer anderen vorteilhaften Weiterbildung der Erfindung konstruktiv besonders einfach, wenn das Federelement der Rastverbindung als einstückig mit dem Schwalltopf gefertigter und nachgiebig gestalteter Steg ausgebildet ist und dass das Halteelement eine den Steg hintergreifende Rastnase hat.

Eine fehlerfreie Montage der Kraftstoff-Sammeleinrichtung lässt sich gemäß einer anderen vorteilhaften Weiterbildung der Erfindung zuverlässig sicherstellen, wenn der Schwalltopf einen Schieber zur Blockierung der Rastverbindung hat und dass der Schieber ausschließlich in montierter Stellung der Rastverbindung verschiebbar und in getrennter Rastverbindung blockiert ist .

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: perspektivisch eine erfindungsgemäße Kraftstoff-Sammeleinrichtung,
- Fig. 2: ein Halteelement der Kraftstoff-Sammeleinrichtung aus Figur 1,
- Fig. 3: eine Schnittdarstellung durch die Kraftstoff-Sammeleinrichtung aus Figur 1 entlang der Linie III - III,
- Fig. 4: eine Schnittdarstellung durch eine Rastverbindung der Kraftstoff-Sammeleinrichtung während der Montage,
- Fig. 5: eine Schnittdarstellung durch die Rastverbindung der Kraftstoff Sammeleinrichtung aus Figur 1 entlang der Linie V-V.

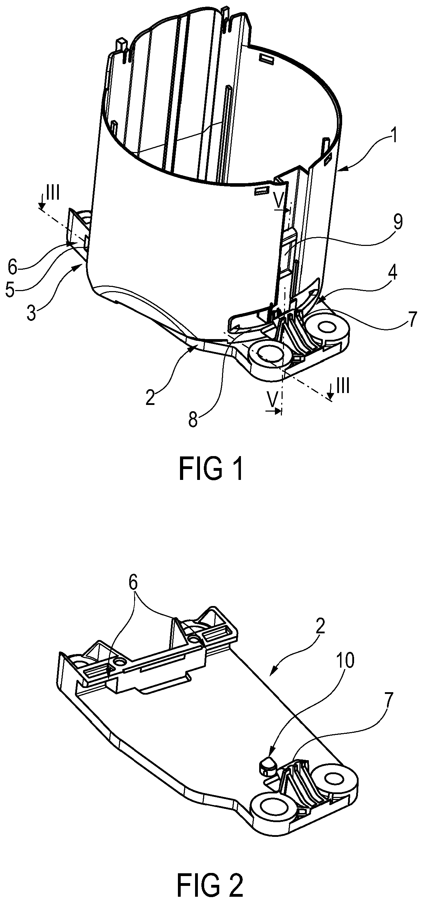

Figur 1 zeigt eine Kraftstoff-Sammeleinrichtung für ein Kraftfahrzeug mit einem Schwalltopf 1 zum Sammeln von Kraftstoff und mit einem Halteelement 2. Das Halteelement 2 dient dazu, an einem nicht dargestellten Boden eines Kraftstoffbehälters befestigt zu werden. Die Befestigung erfolgt beispielsweise durch Spiegelschweißen. Aus dem Schwalltopf 1 wird Kraftstoff abgesaugt und zu einer ebenfalls nicht dargestellten Brennkraftmaschine des Kraftfahrzeuges gefördert.

Befestigungsmittel zur Verbindung des Schwalltopfes 1 mit dem Halteelement 2 haben eine Einhakverbindung 3 und eine von der Einhakverbindung 3 beabstandete Rastverbindung 4. Die Einhakverbindung 3 am Schwalltopf 1 angeordnete Haken 5 und in dem Haltelement 2 angeordnete Ausnehmungen 6 zur Aufnahme der Haken 5. Die Rastverbindung 4 hat eine am Haltelement 2 angeordneten Rastnase 7 zur Hintergreifung eines federnden, am Schwalltopf 1 angeordneten Steg 8. Ein längsverschieblicher Schieber 9 dient zur Blockierung der Rastverbindung 4 nach der Montage des Schwalltopfes 1 am Halteelement 2. Zur Montage wird zunächst der Schwalltopf 1 mit den Haken 5 in die Ausnehmungen 6 des Halteelementes 2 gesteckt und auf das Halteelement 2 zugeschwenkt. Dabei gleitet der nachgiebig gestaltete Steg 8 über die Rastnase 7 des Halteelementes 2 und schnappt hinter der Rastnase 7 ein. Anschließend wird der Schieber 9 verschoben, um die Rastverbindung 4 zu blockieren. Schnappt der Steg 8 nicht hinter die Rastnase 7 oder lässt sich der Schieber 9 nicht verschieben, ist dies ein fühlbares Zeichen dafür, dass der Schwalltopf 1 nicht wie vorgesehen montiert ist. Daher ist es nicht erforderlich, die Montage des Schwalltopfes 1 am Haltelement 2 optisch zu kontrollieren.

Figur 2 zeigt das Halteelement 2 vor der Montage des Schwalltopfes 1. Hierbei ist zu erkennen, dass das Halteelement 2 insgesamt zwei Ausnehmungen 6 hat. Nahe der Rastnase 7 der Rastverbindung 4 ragt ein Stützelement 10 hervor.

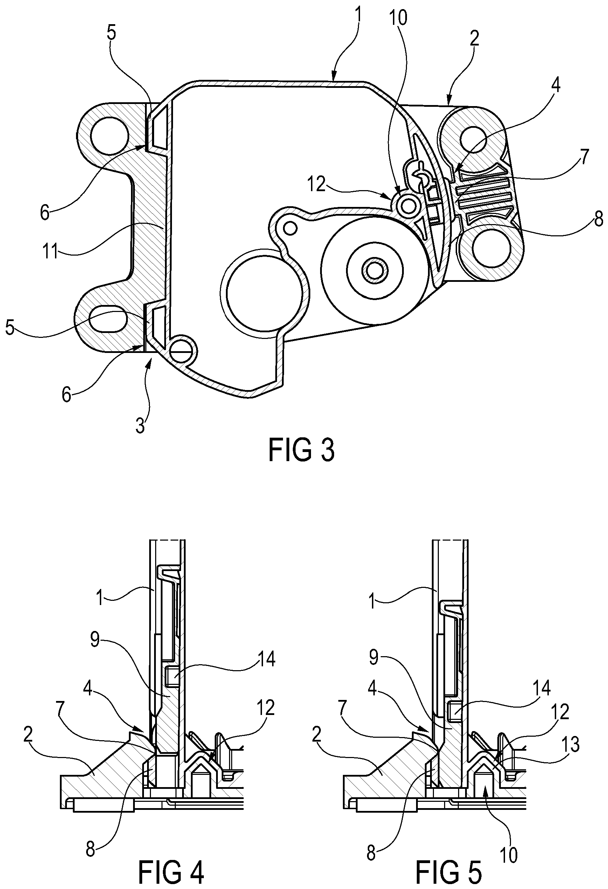

Figur 3 zeigt eine Schnittdarstellung durch die Kraftstoff-Sammeleinrichtung aus Figur 1 entlang der Linie III - III. Hierbei ist zu erkennen, dass der Schwalltopf 1 für jede der Ausnehmungen 6 im Halteelement 2 jeweils einen Haken 5 hat. Eine Stütze 11 zwischen den Ausnehmungen 6 hat die Breite des lichten Abstandes der Haken 5. Weiterhin hat der Schwalltopf 1 eine Vertiefung 12 zur passgenauen Aufnahme des Stützelementes 10. Das Stützelement 10 ist dabei als Zentrierzapfen 13 ausgebildet. Bei dem Einschwenken des Schwalltopfes 1 auf das Halteelement 2 wird die Vertiefung 12 auf das Stützelement 10 gedrückt. Der Schwalltopf 1 ist damit in der von den Haken 5 und der Vertiefung 12 gebildeten Ebene formschlüssig mit dem Halteelement 2 verbunden. Weiterhin zeigt Figur 3, dass der Steg 8 des Schwalltopfes 1 für die Rastverbindung 4 bügelförmig gestaltet ist und einstückig mit dem Schwalltopf 1 gefertigt ist.

Figur 4 zeigt die Rastverbindung 4 nach dem Einschwenken des Schwalltopfes 1 auf das Halteelement 2. Die den Steg 8 des Schwalltopfes 1 hintergreifende Rastnase 7 hält den Schwalltopf 1 an dem Halteelement 2. Der Schieber 9 befindet sich noch in einer Position, in der er die Rastverbindung 4 nicht beeinflusst.

Figur 5 zeigt die Rastverbindung 4 aus Figur 1 entlang der Linie V-V. Gegenüber der in Figur 4 dargestellten Position ist der Schieber 9 hinter den Steg 8 des Schwalltopfes 1 verschoben. Damit kann der Steg 8 nicht mehr wegfedern. Die Rastverbindung 4 ist damit gegen ein Lösen gesichert. Der Schieber 9 hat einen Magneten 14, dessen Position über eine vorgesehene Entfernung erfassbar ist. Hierdurch kann im Kraftstoffbehälter montierten Zustand des Schwalltopfes 1 die Position des Magneten 17 und damit des Schiebers 9 von außerhalb des Kraftstoffbehälters erfasst und damit festgestellt werden, ob der Schwalltopf 1 fehlerfrei montiert wurde.

## Patentansprüche

1. Kraftstoff-Sammeleinrichtung für einen Kraftstoffbehälter eines Kraftfahrzeuges mit einem Schwalltopf (1) zum Sammeln von Kraftstoff, mit einem am Boden des Kraftstoffbehälters zu befestigenden Halteelement (2) und mit Befestigungsmitteln zur Befestigung des Schwalltopfes (1) an dem Halteelement (2), **dadurch gekennzeichnet, dass** die Befestigungsmittel eine Einhakverbindung (3) mit zumindest einem an dem Schwalltopf (1) oder dem Halteelement (2) angeordneten Haken (5) und mit einer am jeweils gegenüberliegenden Bauteil des Haltelementes (2) oder des Schwalltopfes (1) angeordneten Ausnehmung (6) zum Einschwenken des Hakens (5) und eine der Einhakverbindung (3) gegenüberliegend angeordnete, den Schwalltopf (1) quer zu der Montagerichtung der Einhakverbindung (3) fixierende Rastverbindung (4) haben.

2. Kraftstoff-Sammeleinrichtung nach Anspruch 1, **dadurch gekennzeichnet, dass** die Einhakverbindung (3) zwei an dem Schwalltopf (1) oder dem Halteelement (2) angeordnete und voneinander beabstandete Ausnehmungen (6) und dass das den Ausnehmungen (6) gegenüberliegende Bauteil des Halteelements (2) oder des Schwalltopfes (1) jeweils einen in die Ausnehmungen (6) eindringenden Haken (5) hat.

3. Kraftstoff-Sammeleinrichtung nach Anspruch 2, **dadurch gekennzeichnet, dass** eine Stütze (11) zwischen den Ausnehmungen (6) eine dem lichten Abstand der Haken (5) entsprechende Breite hat.

4. Kraftstoff-Sammeleinrichtung nach einem der Ansprüche 1 bis 3, **dadurch gekennzeichnet, dass** der Schwalltopf (1) quer zur Montagerichtung der Einhakverbindung (3) von einem Stützelement (10) abgestützt ist.

5. Kraftstoff-Sammeleinrichtung nach Anspruch 4, **dadurch gekennzeichnet, dass** das Stützelement (10) näher an der Rastverbindung (4) angeordnet ist als an der Einhakverbindung (3).

6. Kraftstoff-Sammeleinrichtung nach einem der Ansprüche 4 oder 5, **dadurch gekennzeichnet, dass** das Stützelement (10) einen von dem Halteelement (2) oder dem Schwalltopf (1) hervorstehenden Zentrierzapfen (13) hat und das jeweils gegenüberliegende Bauteil des Schwalltopfes (1) oder des Halteelementes (2) eine Vertiefung (12) zur passgenauen Aufnahme des Zentrierzapfens (13) hat.

7. Kraftstoff-Sammeleinrichtung nach Anspruch 6, **dadurch gekennzeichnet, dass** der Zentrierzapfen (13) senkrecht von dem Halteelement (2) absteht und nahe an der Rastverbindung (4) angeordnet ist.

8. Kraftstoff-Sammeleinrichtung nach einem der Ansprüche 1 bis 7, **dadurch gekennzeichnet, dass** ein Federelement der Rastverbindung (4) an dem Schwalltopf (1) angeordnet ist und dass das Halteelement (2) ausschließlich feststehende Bauteile der Rastverbindung (4) aufweist.

9. Kraftstoff-Sammeleinrichtung nach Anspruch 8, d**adurch gekennzeichnet**, dass das Federelement der Rastverbindung (4) als einstückig mit dem Schwalltopf (1) gefertigter und nachgiebig gestalteter Steg (8) ausgebildet ist und dass das Halteelement (2) eine den Steg (8) hintergreifende Rastnase (7) hat.

10. Kraftstoff-Sammeleinrichtung nach einem der Ansprüche 1 bis 9, **dadurch gekennzeichnet, dass** der Schwalltopf (1) einen Schieber (9) zur Blockierung der Rastverbindung (4) hat und dass der Schieber (9) ausschließlich in montierter Stellung der Rastverbindung (4) verschiebbar und in getrennter Rastverbindung (4) blockiert ist.

## Claims

1. Fuel collection device for a fuel tank of a motor vehicle with a splash pot (1) for collecting fuel, with a holding element (2) which is to be fastened to the bottom of the fuel tank, and with fastening means for fastening the splash pot (1) to the holding element (2), **characterized in that** the fastening means have a hook-in connection (3) with at least one hook (5) which is arranged on the splash pot (1) or the holding element (2) and with a recess (6) which is arranged on that component of the holding element (2) or the splash pot (1) which lies opposite in each case, for pivoting in of the hook (5), and a latching connection (4) which is arranged so as to lie opposite the hook-in connection (3) and fixes the splash pot (1) transversely with respect to the mounting direction of the hook-in connection (3).

2. Fuel collection device according to Claim 1, **characterized in that** the hook-in connection (3) has two recesses (6) which are arranged on the splash pot (1) or the holding element (2) and are spaced apart from one another, and **in that** that component of the holding element (2) or the splash pot (1) which lies opposite the recesses (6) in each case has a hook (5) which penetrates into the recesses (6).

3. Fuel collection device according to Claim 2, **characterized in that** a support (11) between the recesses (6) has a width which corresponds to the clear distance of the hooks (5).

4. Fuel collection device according to one of Claims 1 to 3, **characterized in that** the splash pot (1) is supported by a supporting element (10) transversely with respect to the mounting direction of the hook-in connection (3).

5. Fuel collection device according to Claim 4, **characterized in that** the supporting element (10) is arranged closer to the latching connection (4) than to the hook-in connection (3).

6. Fuel collection device according to either of Claims 4 or 5, **characterized in that** the supporting element (10) has a centering pin (13) which projects from the holding element (2) or the splash pot (1), and that component of the splash pot (1) or the holding element (2) which lies opposite in each case has a depression (12) for receiving the centering pin (13) with an accurate fit.

7. Fuel collection device according to Claim 6, **characterized in that** the centering pin (13) projects perpendicularly from the holding element (2) and is arranged close to the latching connection (4).

8. Fuel collection device according to one of Claims 1 to 7, **characterized in that** a spring element of the latching connection (4) is arranged on the splash pot (1), and **in that** the holding element (2) has exclusively fixed components of the latching connection (4) .

9. Fuel collection device according to Claim 8, **characterized in that** the spring element of the latching connection (4) is configured as a web (8) which is manufactured in one piece with the splash pot (1) and is of resilient design, and **in that** the holding element (2) has a latching lug (7) which engages behind the web (8).

10. Fuel collection device according to one of Claims 1 to 9, **characterized in that** the splash pot (1) has a slide (9) for blocking the latching connection (4), and **in that** the slide (9) can be displaced exclusively in the mounted position of the latching connection (4) and is blocked in the disconnected latching connection (4).

## Revendications

1. Collecteur de carburant pour un réservoir de carburant d'un véhicule automobile, comprenant un pot d'accumulation (1) pour collecter du carburant, un élément de retenue (2) à fixer au fond du réservoir de carburant, et des moyens de fixation pour fixer le pot d'accumulation (1) à l'élément de retenue (2), **caractérisé en ce que** les moyens de fixation présentent une liaison par accrochage (3) dotée d'au moins un crochet (5) disposé sur le pot d'accumulation (1) ou l'élément de retenue (2) et d'un évidement (6), disposé sur le composant respectivement opposé de l'élément de retenue (2) ou du pot d'accumulation (1), destiné au pivotement du crochet (5), et une liaison par encliquetage (4) disposée à l'opposé de la liaison par accrochage (3) et fixant le pot d'accumulation (1) transversalement au sens de montage de la liaison par accrochage (3).

2. Collecteur de carburant selon la revendication 1, **caractérisé en ce que** la liaison par accrochage (3) présente deux évidements (6) disposés sur le pot d'accumulation (1) ou l'élément de retenue (2) et espacés l'un de l'autre, et **en ce que** le composant, opposé aux évidements (6), de l'élément de retenue (2) ou du pot d'accumulation (1) présente respectivement un crochet (5) pénétrant dans les évidements (6).

3. Collecteur de carburant selon la revendication 2, **caractérisé en ce qu'**un support (11) entre les évidements (6) présente une largeur correspondant à la distance libre des crochets (5).

4. Collecteur de carburant selon l'une quelconque des revendications 1 à 3, **caractérisé en ce que** le pot d'accumulation (1) est supporté par un élément de support (10) transversalement au sens de montage de la liaison par accrochage (3).

5. Collecteur de carburant selon la revendication 4, **caractérisé en ce que** l'élément de support (10) est disposé plus près de la liaison par encliquetage (4) que de la liaison par accrochage (3).

6. Collecteur de carburant selon l'une quelconque des revendications 4 ou 5, **caractérisé en ce que** l'élément de support (10) présente un tourillon de centrage (13) dépassant de l'élément de retenue (2) ou du pot d'accumulation (1), et le composant respectivement opposé du pot d'accumulation (1) ou de l'élément de retenue (2) présente un creux (12) pour l'ajustage précis du tourillon de centrage (13).

7. Collecteur de carburant selon la revendication 6, **caractérisé en ce que** le tourillon de centrage (13) fait saillie verticalement à partir de l'élément de retenue (2) et est disposé à proximité de la liaison par encliquetage (4).

8. Collecteur de carburant selon l'une quelconque des revendications 1 à 7, **caractérisé en ce qu'**un élément de ressort de la liaison par encliquetage (4) est disposé sur le pot d'accumulation (1), et **en ce que** l'élément de retenue (2) ne présente que des composants fixes de la liaison par encliquetage (4).

9. Collecteur de carburant selon la revendication 8, **caractérisé en ce que** l'élément de ressort de la liaison par encliquetage (4) est réalisé sous la forme d'une entretoise (8) fabriquée d'un seul tenant avec le pot d'accumulation (1) et configurée de manière flexible, et **en ce que** l'élément de retenue (2) présente un ergot d'encliquetage (7) venant en prise derrière l'entretoise (8).

10. Collecteur de carburant selon l'une quelconque des revendications 1 à 9, **caractérisé en ce que** le pot d'accumulation (1) présente un coulisseau (9) pour bloquer la liaison par encliquetage (4), et **en ce que** le coulisseau (9) est mobile uniquement dans la position installée de la liaison par encliquetage (4) et est bloqué lorsque la liaison par encliquetage (4) est séparée.
